# EUROPEAN PATENT APPLICATION

(11) **EP 1 712 417 A1**
(43) Date of publication of application: **18.10.2006**
(21) Application number: 05708076.4
(22) Date of filing: 02.02.2005
(51) Int. Cl.: B60Q 1/14, B60R 1/12

(54) **MULTISIGNAL DEVICE FOR VEHICLE, COMPRISING A LIGHT-EMITTING CORE**

(30) Priority: 02.02.2004 ES 200400292
(71) Applicant: Mandagaran, Matias, 08100 Mollet del Valles (ES)
(72) Inventor: Mandagaran, Matias, 08100 Mollet del Valles (ES)
(74) Representative: Gislon, Gabriele
(86) International application number: PCT/ES2005/000041
(87) International publication number: WO 2005/073026

(57) **Abstract**

The invention relates to a multisignal device for the rear-view mirror of a vehicle, which can be connected to other parts of the vehicle and which comprises a light beam emitter, said beams lighting up in a progressive and controlled manner according to the user's requirements or the automatic response to events. In addition, the signal can exit at the front and/or the side owing to the arrangement of the elements of the system. The light sources essentially comprise cores with printed circuits on the faces thereof, in which LEDs are inserted.

## Description

The present invention refers to a multi-signal applicable to a rear-view mirror of a vehicle placed inside of a housing, in a part thereof o in a lid of said housing; it comprises at least a light source consisting in a support module or light unit (Z) including several LED's in a simplified circuit with conducting tracks printed on both faces or alternatively two parallel circuits joined by their opposite sides o one core including metallic tracks printed or dice-cut where the LED's are inserted facing outwardly and in opposite directions and reflective means , so that the emitting direction of said LED's or by means of the reflective means employed (S1), en opposite directions of the focus 1, (F1) and the focus (F2) which are approximately diametrically opposed, provide an exit of the light through a transparent cover of high brightness through a shadowless transparent perimetrical band the light being in part direct or in part reflected by a metallized collimator o internal elongated parabola, said solutions being applicable to other parts of the vehicle.

This light emitting core (Z) comprises also depending of the exit light angle whished, in a sandwich of at least two interconnected circuits each of them equipped with corresponding LED's, attached o bonded to a core of a good heat conductor material, with longitudinal openings that allow circulation of air helping in the cooling, being the resulting external faces of the light unit parallel o no separating from an axis between 0 ° and +/- 90° from an upper apex (XL) with the aim of the light emitting focus of each LED be duly positioned in such a way that part of the light is reflected inside a parabola of the device, at least one time before passing through the transparent covers preferably colorless or slightly tinted in a fumé, light blue, watery green, whitish or orange tint, among others tones.

The device produces at least one intermittent turn signal that is yellow-orange, with the resulting emission for the rotation signal being between 400 and 620 nanometers, although the transparent cover is colorless, with a light output visible from the front section, the side and the rear of the vehicle, covering an angle to the rear of more than 60° with respect to the circulation axis taking 0° as reference in a simultaneous fashion and projected onto a horizontal plane from a salient point of the rear view mirror farthest away from the bodywork. The light emission is not visible to the divers, or if it is visible, it is not disturbing because the light focus is aimed by the necessary optic means from its output end backwards in an angle that is different to the location of the driver's eyes. Based on two planes, which are the external and internal surfaces of the transparent cover adjacent to the light to the rear, it is possible to change the light direction with the necessary convergence according to the angle of incidence and the light output through it.

The device is adapted to produce another permanent white signal, visible from the front and equal for the other beams or other colors, such as yellow, blue or green, which are used to determine two illuminated traces at the sides of the vehicle, from infinity (to the front) to the side ground close to same and allows the vehicle width, as seen from the front, to be distinguished, where the various light beams are progressively added or removed, covering the lighted zone acting as the unfolding of a light-emitting fan, with this progressive lighting being controlled in several ways.

These signals, within the same device, with one or more transparent light output windows, or structured into separate modules, one for each signal, provide several operating combinations.
A. Frontal signal that lights up infinity to the front, together with the light that lights up the side ground, both white or yellow and with alternating lighting and/or progressive, summing one light beam to another, according the needs and application and according the automatic commands and controllers.
B. Turn signal, together with a different colored frontal signal, both located below the same transparent cover, without the progressive part.
C. Turn signal, together with the lateral zenith light and with the same transparent cover that does not illuminate infinity in front of the white light.
D. Complementary signal or light that illuminates the field of view of the adjacent chamber oriented to the front or side, of any type digital or analogue that unit incorporates inside or outside of same.

All this devices avoid the steaming up and the condensation it incorporates obtaining more brightness and clarity in the transparent cover because they incorporate a second transparent plate being thinner than the outside transparent cover, an air chamber being created by a gap of at least 0.1 mm between said transparent cover and plate, this latter being gripped around the whole perimeter between the transparent cover (1) and the reflector (2). Another form to prevent the steaming consists in using an a thermal film being applied which is made of a material having a heat conduction being different from that of the transparent cover.

This piece (30) is smooth and can integrate optical elements like lens or prisms slightly tinted in a fumé, green, orange or whitish.

Another novel way of providing more brightness and clear said transparent cover is to prevent the formation of a dark perimeter generated by the exterior vision of shadows produced by the unequal adaptation to the part containing it, in addition to preventing direct view of the edges of the weld between the plastic parts that make it up, consists of covering up the weld under the casing edge and to create a perimeter band on the transparent cover without any shadows by means of its two surfaces, interior and exterior, with the interior surface being the most parallel possible in relation to its exterior homonym.

The progressive signal module can be constructed as an external module for application to various rear view mirrors in an externally added manner, but to obtain better termination and installation. These devices, together or separated, with one or two functions can be fitted to various rear view mirrors without the need for the casing to be made with an aperture to house them, since said aperture or window is obtained using precision laser system cutting, or high-pressure water jet, programmed so that it can produce a series of several units. Said modules are secured by internal self-adhesive strips along the perimeter inside the rear view mirror in case clips or turrets for the screws, as they are normally secured, are not available.

The light-emitting circuit or core is supported on a small cover with a substantially flat welded edge that facilitates and ensures a good weld and is also fitted with cooling fins. The support is made of a material that helps to transmit heat, such as metal or plastic with charges or resin and is combined with a casing with at least one orifice to prevent the entry of water by gravity or pressure.

Since the circuit has a double side, it allows larger areas for the traces adjacent to the welded points, which improves heat dissipation. In addition to being printed, said traces can be die-cut or stamped metal that adhere to the core by clips and riveted by ultrasound.

Because it is quite rigid, said core facilitates installation stability, secured in place by clips, teeth, guides, hot-stamping, ultrasound or adhesive, facilitating the exit of the cables, usually with a rubber trim of a connector direct to pins inserted into the same circuit.

The LEDs may be of different types and optics depending on the zone to illuminate and are located at a rather external point, close to the transparent cover to improve the light output in one or the other directions and, for enhanced light power, an encapsulated multi-chip can be employed, which comprises various LED chips grouped on a support, or directly on at least one of the circuit board faces or the same board or PCB, with the corresponding optics or transparent protection.

The circuit may be for symmetric usage, so that it can be used equally on both the left and right sides of the vehicle.

The circuit in an exemplary embodiment will only have LEDs on one of the faces and will use the other face for heat dissipation.

The cited light-emitting core can be, in turn, inserted or plugged into another circuit or base support for this purpose on the side opposite the point where it has the LEDs, it has soldered beams or traces for connection or for retaining, soldered or secured to the second circuit, which is made of fiber glass, bakelite, a printed tape of polyester or similar, or a flat cable and/or is made of soft, die-stamped metal sheet traces, which are bent with housings that retain at least one or more cores, such as a unit module that can be repeated.

For a stable connection on including a circuit in another, said core would be preformed, or injected, or a metal core or die-stamped sheet, its base insertion part can have a wider section in the form of an "L" or "T" so that it facilitates its insertion into the second circuit, in this way, it would also be possible to install a series of cores in parallel.

Another way of orienting the light for the intermittent signal from a core or point next to the critical end due to the lack of space in the light output zone to the rear and for alterative power supplies is by a reflector body interposed between the LED or lamp power supply and the transparent cover, which produces a back-reflection, either symmetric or asymmetric depending on what is allowed by the rear view mirror's curved zone geometry where the light is emitted and which, in turn, is reflected by the parabola for the second time, with part of the signal reflected towards the F1 functional zone and the other part to the F2 functional zone, to the sides and rear. Said back-reflector has an approximate "Y" or "T" shape extending towards the sides of its fins and may or may not have several partial perforations to facilitate the light output towards the front dark zone.

Said reflector is metalized as is the rest of the reflector and may form part of it or not, as an alternative it is proposed to use a partial optical reflection on the interior face of a transparent body, which may be independent or form part of some of the transparent cover surfaces. In both cases, the reflection surface has an approximate inclination of 45° with respect to the focal centre of the light generating element, which would be in a core or flat circuit at the bottom of the assembly body.

### State of the art

Various rear view mirrors are known that incorporate one or more light-emitting modules in their casing for the purpose of facilitating vision in the lower areas of said mirrors and vehicle sides, of the indicators, and that of the front signal or sidelights.

As a result of a search conducted in the field taking into account words such as circuit, LED, foldable circuit, combined with terms such as rear-view, mirror, etc.) and taking into consideration more pertinent US class 362/494, 362/540, 362/545, 362/800 and International classes B60Q, 1/26. B60R, 1/06, B60R 1/12, the most relevant documents discovered are following detailed:
US 2001/0010633 A1, AGO-2001; DE 20001 407 U1, and US 2003/0168247 A1, Reitter & Schefenacker, relate to a manufacturing and overinjecting system of a conductor film with LEDs.
US 6,644,838 B2, Schefenacker vision system, discloses an intermittent light located at the end of the rear view mirror fitted with a light bulb.
GB 2 275 329 B and US 6,227,689, Donelly Corporation, are a patent family disclosing several lighting devices with different aims.
US 6,264,353 and EP 1 133 411, Lear Automotive, relates to a signal emitted from below the mirror glass which is oriented only to the rear, like Muth.
WO 00/26061, Muth Company, discloses an intermittent light located under the mirror glass not including any lighting core like the one disclosed herein.
W 98000831B, Philips Electronics, is a luminary made up of a plurality of LEDs with a shape similar to a big light bulb.
EP 1 255 306 A2, Lumiled Lighting, relates to an optic for diffusing the light from the LED.
EP 1 296 382, Osram Silvana, is a reflecting system applicable to a very voluminous circular luminary.
WO 00/31708 relates to a plurality of LEDs for traffic signals.
U ES 200102259, Hella, discloses a side signal for buses and the circuit is a flat one having nothing related to the here proposed.

### Brief summary of the invention

Therefore it is interesting to offer an alternative to the state of the art that overcomes the limitations of the previous documents. In this regard I have found a light source comprising an array of light emitters being adapted to be progressively switched on in a sequential, combined an/or consecutive manner as per the vehicle's running direction and speed and a technique for this light also applicable outside the automobile field sector consisting in emitting light from a very small volume with a direction moving out 90 ° to the sides of the axis of said device, with elongated reflective means with a collimator and form a core with circulation of air therethrough with heat dispersion. The proposed device is easy to manufacture and with a low cost and allows to emit a light in an angle that is adapted to the needs of reflection for each use. This innovation is applicable and adaptable to construct any other kind of lightening, and applicable to other parts of the vehicle o either useful for home lightening, o for different apparatus.

The device of the present invention comprises at least:
- A cover or laminar plate that is transparent or translucent through which a light-emitting core emits an intermittent turn and/or emergency signal, either directly or reflected, forwards, to the side and to the rear, and/or a progressive signal. This cover is preferentially smooth and, as an alternative, presents a second internal, transparent and also smooth cover, although in part it could carry prisms, micro-lenses, engraved or granulated in the form of diffuser, lenses and/or light guides forming a single piece and has a small orifice separated by at least 0.1 mm, forming a thermal air chamber to prevent condensation on the externally visible part of the transparent cover and/or failing this include surface treatment inside the transparent cover, which consists of the application of an adhered transparent polycarbonate film or similar, or transparent polymer or polyurethane paint, having different thermal transmission properties and/or a nanotechnology surface treatment that defines grooves or fine engraving that prevents the accumulation of drops through condensation.
- A metalized reflector and internal body permitting that, in the critical narrowing zone (DC), there are only two thicknesses of the device, the casing body and the transparent cover, permitting a larger corridor of light without increasing the volume in the area towards the rear (8) or the passageway or collimator formed by a reflector elongated to the front over the development of an elongated, stepped parabola or a surface that is almost parallel to the transparent cover, which bears micro surfaces or micro convex mirrors like the slats of a slatted shutter or blind.
- A circuit support or circuit cover that is much smaller when compared to known signal supports in consequence and an advantage of the concept of introducing a circuit in the shape of an arrowhead that pierces and is introduced into the volume of the reflector with a flattened welded perimeter that joins it to the reflector by welding, clips or screws, it has cooling fins and teeth that support and retain the circuit and at least one ventilation opening, with a connector fitted directly to the circuit by an aperture and/or a power cable exit with an aerial connector that relates to the rest of the general vehicle electric circuit.

It is characteristic that the circuit is visible externally inside the reflector volume by a prominence or mask with side orifices that facilitate light output, together with other small frontal cooling orifices (44) and remaining light output to the front. In the case where this cover (3) is not fitted with a series of lenses or a diffuser on the transparent cover (80), the presence thereof is dissimulated by the circuit painted in a color similar to that of the reflector bottom, otherwise said cover could be an independent part.

The emission of the white frontal signal produced by white LEDs or by an RGB system that also produces white among other colors, or masked light bulbs or other light source, such as neon, comprises a progressive combination of light beams with a focal centre towards the front and infinite, coinciding with the circulation axis to the side floor, with at least two light-emitting cores or beams switching on or off consecutively. The horizontal amplitude of the sidelight at the front or (B1) or start of the progressive signal is greater than 45° towards the inside of the vehicle and greater than 80° towards the exterior with reference to the focal centre (P1) or 0° angle and for each side of the vehicle, with a minimum light intensity of 1 candela and greater than 0.01 candela in the rest of the area to light, which vertically comprises at least +15° and -15°, but the -15° are transformed into an angle of more than -135°, unifying at least more than one core or light-emitting point and the respective beams (B2), (B3) and (B4) that have different emission angles in accordance with the requirements in low-speed operations forward and backward, by means of manual or automatic commands. The light source comprises a light-emitting core into which the light-emitting elements are inserted, LEDs or multi-chip LEDs in a circuit with conducting traces printed on both sides or, failing this, two parallel circuits with conducting traces where the LEDs are inserted orientated to the exterior and opposite, meaning the light emission direction from said LEDs is in opposite or different directions, producing a light output to the exterior that is partly direct and partly reflected in the collimator.

If the transparent cover formed by one or more windows is over-injected to one part of the rear view mirror, it is normally welded and joined to the reflector. In this latter case, the device includes two parts plus the circuit cover and comprises two joining welds; another form of integration into the transparent cover and body welded to a reflector mounted as a sandwich part, comprising three parts and a weld, or two parts if there is no reflector

### Graphical description

The various characteristic details of the invention will appear from an exemplary embodiment in accordance with the attached drawings which are merely for non-limiting, guideline purposes.
Fig. 1 shows a perspective view of a car's exterior rear view mirror on the casing of which is mounted the device proposed by the present invention, the reflector is shown elongated forwards or collimator coinciding with the zone or focus 1 (F1) and the solid or hallow projector or passageway (8) backwards or focus 2 (F2), together with the high-brightness crystalline perimeter band (1A) and the light towards the direction (P1) that complements the chamber view (100) and the core (Z).
Fig. 2 is a perspective view of a vehicle that incorporates the rear view mirror of Fig: 1, where the possible areas to illuminate are indicated.
Fig. 3 shows a horizontal section of a rear view mirror as in Fig. 1, in which the component elements can be seen, the LEDs with opposite orientations (4), the core (Z) comprising the double-side circuit (7), the light path in function (x1) and (x3), the passageway that, with the transparent cover (1), forms the elongated reflector or collimator and the light from the chamber (100) in a frontal direction (P1).
Fig. 4 is a vertical section close-up of the light-emitting core of Fig: 3, located in the mid zone of a rear view mirror.
Fig. 5 is an upper view and section of Fig. 4, in its mid section, with the device in operation and light path towards (x1) and (x2), and the diffuser (80) to prevent the view of the interior circuit as an exemplary embodiment.
Fig. 6 shows a vertical section of the illumination device installed on the casing of a rear view mirror, in accordance with Fig. 1, but in the part of the progressive frontal signal, for another exemplary embodiment.
Fig. 7 is a horizontal section like Fig. 3, but, with the variation of a flat core, together with reflective means close together, facing the LED focus with an approximate inclination of 45° to form a back-reflection, with the light path shown, with similar results to the opposite LEDs of Fig. 5.
Fig. 8 is a section like that of Fig. 7, but with an alternative bulb light source, with reflective means and similar results and concept as Fig. 7.
Fig. 9 is a horizontal section of a device with similar concept as the devices of Figs. 7 and 8, but the reflectors are prisms (R) with a similar result of the light emitted in opposite directions from a core, in this case, the circuit (7bis).
Fig. 10 is a section like Fig. 4, but located and integrated into the lower cover of a rear view mirror, with a core cover with upper fins (16).
Figs. 11-A, 11-B and 11-C show close-up sections of various light-emitting variants that are characteristic of the invention, where:

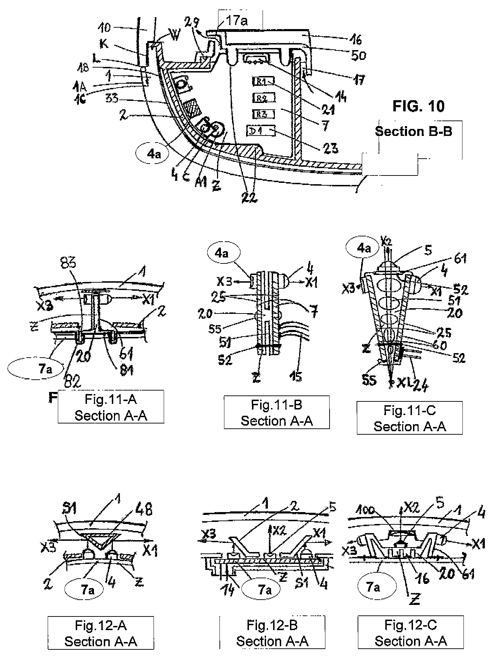

Fig. 11-A is a preformed core (20), with a base (81) and its die-cut contacts (83), it is bent and fixed to another pressure-fit plug-in circuit or base, retained and secured by the stamped and bent metal traces (82), as a repeatable modular core.
Fig. 11-B is a core (20) with an air passageway as a radiator for the two opposite circuits (7) and separated by the said core that bears them.
Fig. 11-C is a core (20), the faces of which are not parallel for two circuits (25) inserted in it, this aperture generates a new face into which an element (5) is inserted that emits light in the dark direction for the other versions of Figs. 11-A and 11-B.
Fig. 12 A shows the concept of light emitted in directions (x1) and (x3), similar to Fig. 11, but from a core or flat circuit (7bis) and through reflection of light from the surfaces (S1) at 45° with respect to the light in the source.
Fig. 12 B is a variant of Fig 12 A, but with the surfaces (S1) separated so that an element (5) can be added that emits light in direction (x2) prior dark zone for the other versions of light emitted in opposite directions.
Fig. 12-C is a preformed module (20) with die-stamped and bent metal traces, with ventilation fins (16) that complements the chamber (110) that carries and emits light in three directions (x1, x2 and x3).

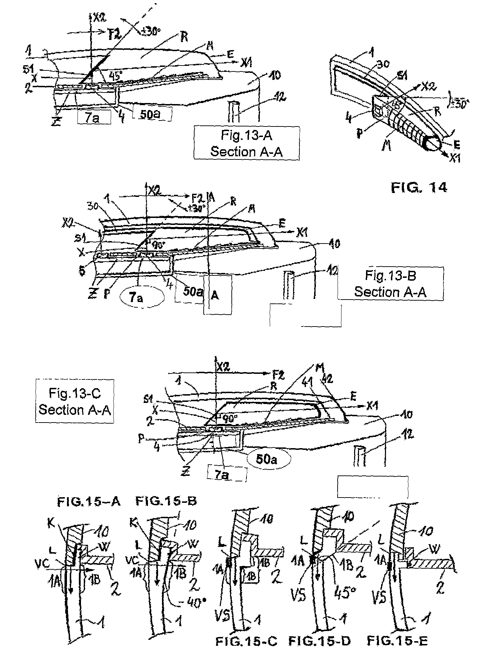

Fig. 13 shows the prism transparent surface (R) in close up as it reflects light at the surface (S1) with an inclination of 45° and a variation of ± 30° with respect to the primary (x), producing a deviation of 90° in direction (x1) towards the zone (F2), as a variation of said body (R) is:
Fig. 13-A integrated and forming part of the surface (1).
Fig. 13-B integrated and forming part of the second transparent surface (30).
Fig. 13-C is independent.
Fig. 14 is an isometric view of the body (R) where it can be seen that the internal surface (M) is curved with a semi-pipe shape.
Fig. 15 shows details of the concretion of the crystalline perimeter (1-A) from the limit (L) between the rear view mirror casing (10) and the transparent cover (1) in order to achieve this high-brightness and total transparency effect without any dark zones. Said perimeter comprises a band extending from the limit (L) to the centre of the transparent cover (1) by 10 mm wide for much of its path, establishing a relation between the external surfaces (1-A) and internal (1-B), as two surfaces as parallel, flat and smooth as possible; as a maximum, (1-B) has an inclination with respect to (1-A) of less than 40° and if (1-B) is curved, this condition is met by its tangent at a mid point. It can be seen that Figs, 15-A and 15-B produce the crystalline vision (VC) zone, Figs. 15-C and 15-D produce the zone of dark shadow vision (VS), because (1-B) is inclined by more than 40° and Fig. 15-E produces the dark zone (VS) by external vision of the welding zone (W).

### Detailed description of an embodiment example

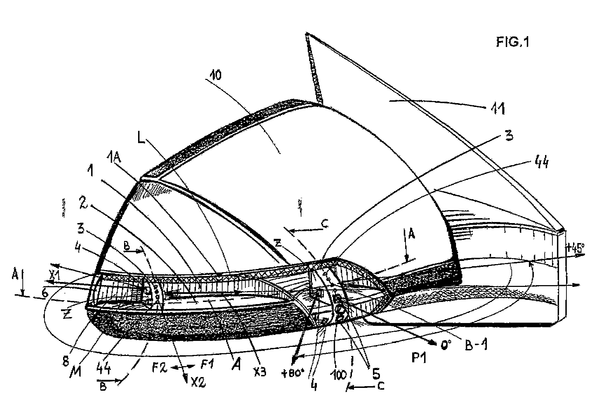

Just as shown by the figures, the present invention concerns an illuminating device with at least some of the previously cited functions A, B, C and D, applicable to an exterior vehicle rear view mirror, such as the one of Fig. 1, located in the casing (10) of the mirror (12), comprising at least one light-emitting core or source with LEDs and/or an encapsulated LED multi-chip or a group of LED chips inserted directly into the PCB of a circuit with an axial output (4) behind a cover (3) or not. In the case of the circuit being visible from the exterior, its should be painted in any color that dissimulates its presence, and the transparent cover (1) or (30) will have, at least 10 mm in front of and behind an intersection with the circuit plane, a zone (80), Fig. 5, of interior prisms, semicylinders that are concave and/or machined or engraved, in order to hide the vision of the circuit from the exterior.

Said core is inserted into a reflector, with its interior face (2) usually metalized or painted in a certain color and closed by at least one translucent or transparent cover (1), through which and by means of the LED (4) source produces at least one function, such as the turn signal forward, to the side and behind a side zone of a vehicle, thus covering areas (F1) or focus 1 to the front and (F2) or focus 2 to the side and behind.

The device also illuminates a frontal zone of the vehicle with a focus (P1) to the front and infinite coinciding with the circulation axis or angle 0° of the vehicle, the intensity of which at this point is always greater than the rest of the illuminated area by the same signal, by means of the light-emitting source (4) and (5) with white, yellow, blue and green light or a combination of at least two of said colors between its various light beams.

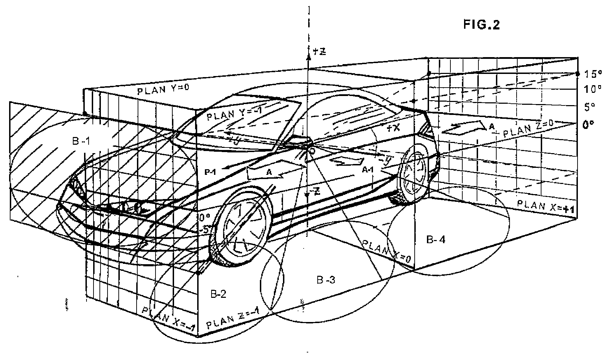

The frontal illumination (B1) that establishes the width and presence of the vehicle as seen from the front operates permanently, but not the rest of the light beams that are progressively incorporated according to the issued commands; Fig. 2 (B-C 2 + B-C 3 + B-C 4), possibly with other illuminated aperture angles. This light is also a complement of the adjacent chamber (100) which is carried inside or outside the said device.

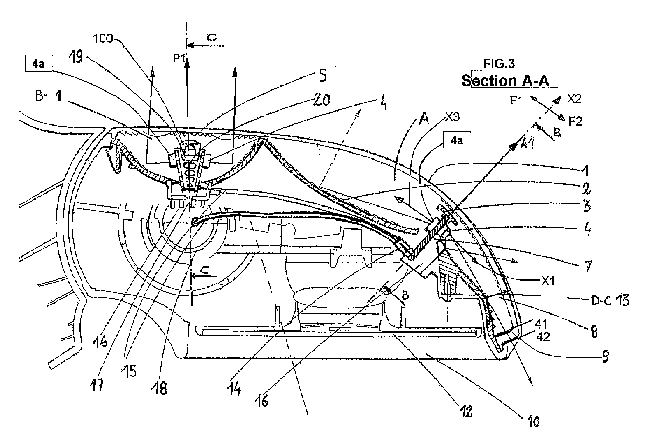

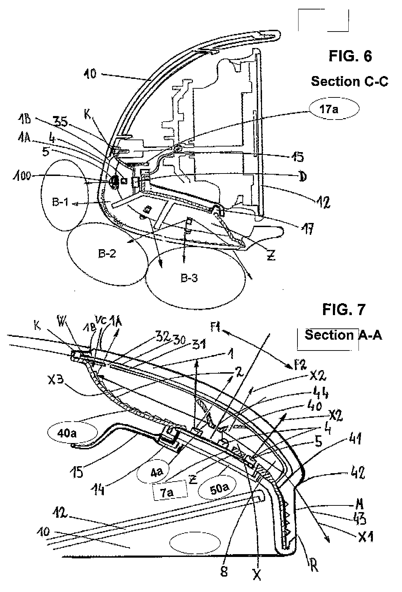

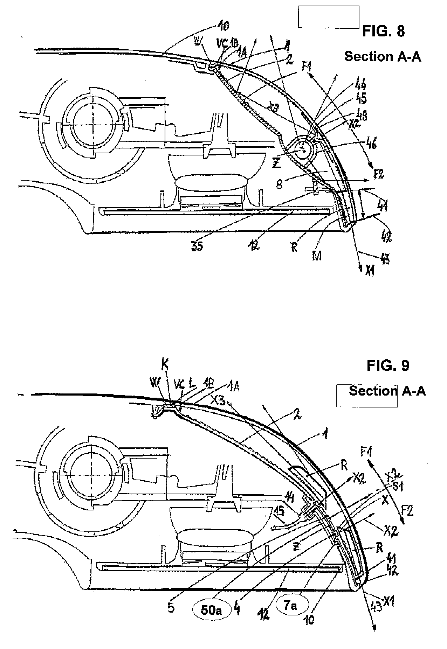

Fig. 3 shows the core circuit (7) of the light source precisely inserted into the reflector volume (2) and, since it is only one sheet, a small cover (50) is enough to support and secure it and from which the direct connector (14) leaves and is taken to the cable (15). The critical distance (D-C13) or narrowing of the mirror plane (12) at its maximum rotation and thanks to the small circuit cover makes it possible to widen the light path backwards (8) between the transparent cover (1) and the reflector (2), which allows better definition of the signal to the rear in the zone (9) delimited by the surfaces (41) and (42) that can carry a series of micro-optics for this purpose, Figs. 7 and 8. The convergence and non-parallelism of said surfaces enables the light to be directed behind without molesting the driver's eyes and the distance between said planes produce a thickening in the light output to the rear which is transformed into a solid passageway (R), similar to the hollow passageway (8), with, where possible, both passageways having at least one interior semi-cylindrical or semi-tubular surface (M) with reflective means to better orientate the light towards the rear.

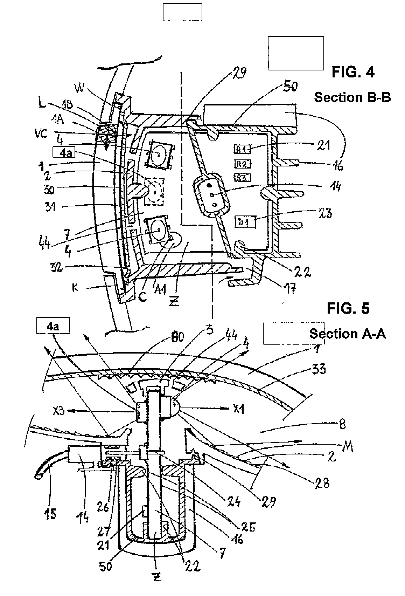

Fig. 3 shows an example of the frontal signal towards (P1), the light-emitting core comprising two circuits fixed to the radiator body (20), with axial LEDs and a third circuit with a frontal LED (5), with the LEDs of a different nature but inside the same core, as shown in Figs. 4 and 5 by means of the LEDs (4) and (4bis), and in the execution of the circuit (7) retained by the teeth (22) with a direct connector (24) which permits the connector (14) to be secured by a clip (26) and be sealed by an elastomer seal (27).

As a variant, instead of including three interconnected circuit faces, the solder traces can be directly formed by a soft metal sheet with treatment that facilitates soldering it and said sheet can be die-stamped, folded and secured to a preformed core (20), just as shown in Fig. 11.

Fig. 4 shows the second transparent surface (30) that forms the air chamber (31) and ventilates through the orifice (32) in order to avoid misting visible from the exterior, complementing the thermal system with the cooling fins (16) and the ventilation orifice (17) or (17b). Unlike this, in Fig. 5 the interior surface of the transparent cover is seen with an adhered non-thermal anti-misting film (33) and completing the anti-misting system with a metal cooling sheet on an interior wall close to the light source as applicable.

Fig. 4 shows an overload protection resistor circuit with at least one resistor R1 (21) and diode D1 (23).

In another exemplary embodiment, it can be seen in Fig. 6, the axial and frontal projection of the light emission and the way in which the beams are progressively incorporated as when a fan is opened, following order (B1), (B2) and (B3), where (B1) is a complement of the chamber (100).

Another exemplary embodiment is the variant of projecting the light to the rear (F2) from a reduced volume, such as the passageway (8), see Fig. 7, by means of a back reflector (40) or (S1), which is part of the reflector piece (2) or an independent part, comprising a flat micro-mirror, slightly curved or parabolic and, in accordance with the required optical study, is inclined to 45°, with a margin of ± 30° with respect to the initial focal plane (x) of the light from the LED or multi-LED, which is applied interposed between said light-emitting element (4) and the transparent cover (1) producing a light deviation close to 90° or path (x1) towards (F2), employing a flat circuit (7bis) and a support cover (50bis), which is somewhat larger, but the overall volume in this zone is minimum. It also has the possibility to direct the light towards (F1) with another reflector mirror that is inversely inclined (40bis), symmetrically or almost symmetrically opposite, producing path (x3) towards (F1).

Another way of producing said 90° reflection of the light is to orient the output of the same and with the same principle, by optical means through a prismatic body (R) (see Figs 9, 13 and 14), which has a light input surface (P) normal to the initial path (x) of the light generating element (4) to be reflected on the internal surface that is smooth or has micro-prisms (S1) with inclination and shape with respect to path (x2) of the light normal to the surface (1) of approximately 45° variable by ± 30° (the same concept as for the back-reflector (40) of Fig. 7, 12-A and 12-B). In this case, part of the light forks and follows path (x2) by transparency, equal to the initial (x), and the other part follows path (x1) at 90° with respect to the initial path, towards the focus (F2). In order for said path (x1) to be efficient, the prismatic body (R) is prolonged as necessary to the output surface (E) and also has an internal mid surface (M) with a series of reflecting surfaces or internal collimator, with an inclination in accordance with the necessity to transmit the light to the desired angle, said surface (M) being preferably curved forming a semi-cylinder or semi-pipe.

If (R) is an independent body, the surface (S1) can undergo metalizing treatment to enhance its reflection.

This body (R) can have another symmetric one oriented in the opposite direction (F1) to emit light in opposite directions from a core having the same shape as the double-side core or circuit and can also be tinted or colored instead of being transparent.

Another exemplary embodiment, with the same principle of diverting light from a core in opposite directions (see Fig. 8) is a device with a bulb (45) source, tinted in the regulatory color for the signal or masked by the cover (46) in order to color the light, which is back-reflected by the cover (48), which comprises an independent piece of heat-resistant material, for example, polycarbonate, folded metal, aluminum or stainless steel in a "Y" or "T" shape, with deployed wings. The reflection surfaces are smooth, flat, parabolic or with micro-mirrors and inclined 45° with respect to the light emitted by said bulb, similar to the concept of the visible reflectors and orients the light to 90° in at least one direction towards (F2), with respect to the path normal to the transparent cover (1) of focal centre which said bulb would have to outside the device.

The reflectors and cores can be independent, which would allow:
■ them to be fixed to the surface (1) or (30), or to the reflector or internal body (2) by clips or by pressure, glued, hot-stamping, ultrasound or other thermal methods.
■ them to be moved without having to redesign the device to obtain precise adjustment of the light output in direction (x1) or (x3).
■ avoid the dark zone in direction (x2), by means of holes in the back-reflector (44) or by separating the surfaces (S1) the wings or the sides of the core circuits (20), including an element between the two that emits light towards (x2).

Alternatively, said reflectors and cores will form part of the device as part (2) for the mirror (40), or the transparent cover surfaces (1) or (30) for the body (R). In such a case, the light output from the prismatic body and the transparent cover are the same, or the core (20) as a module inserted in another circuit or base.

Another exemplary embodiment is shown in Fig. 10, with the upper installed cover (50) and it must be pointed out that the oblique cover of Fig. 4 permits part of the circuit to move outside the reflector volume, facilitating its cooling by the fins (16), with at least one orifice being common (17) or (17bis), with a water drop and expansion chamber (45) for the pressurized water and complementing system ventilation with the radiator surfaces (16).

These orifices (17) atmospherically couple the first with the exterior, and the second assembly chamber (31) with the orifice (32), balancing the temperatures of both and thus preventing misting.

Figs. 11 A, B and C are examples of preformed light-emitting cores (20):
Fig. 11-A is a preformed core with base (81) to hold another circuit.
Fig. 11-B shows two circuits fixed by hot-stamping to the radiant core (20) with a longitudinal ventilation channel, the LEDs are inserted into the traces (25) on opposite sides, to which the jumpers (52) are connected and which are metalized orifices, the same as the soldered traces, or cables or sheet; various jumpers are employed because they facilitate thermal conduction from once side to the other for said core, in Fig. 11-C, the radiant core does not have parallel sides, the system aperture is provided by the lower vertex (X) and the circuits are fixed by guides (55) or use die-stamped sheet traces, while a third circuit is presented for the Frontal LED (5), which is the progressive signal (B) in Figs. 1, 3 and 6.

The core (20) may be a metal current conductor and be connected to the traces by said jumpers (52) in order to favor thermal conductivity to an element of greater metal mass, this connectivity is characterized by being the same pole that is connected to the LED or multi-LED cathodes.

The circuit tracing may be printed by any deposition, stamping or adhesive system, even directly on the radiant core body (20), or produced using die-stamped sheet and folded so that it encloses said core (20). In that case, it is a molded part with opposite sides having the desired separation, inclination and shape (see Fig. 11-C) or have a base for stable support or inserted by pressure into a second circuit, such as the resistive protection one or laminar or flat cable and thus be able to laterally move or place several circuits or light-emitting, double-sided cores in parallel over primary support traces or circuit; said sheet traces may be designed with a base for fixing in place by clamping, pressure or soldering to said second base circuit Figs. 11-A, 12-C.

Depending on the version, the light-emitting elements of any type can have the appropriate optics to provide the light angle required according to a direction, for example, light concentration optics can be employed in the direction to the rear (F2).

In the circuits into which the light-emitting elements are inserted (LEDs (4) or groups of chip-LEDs or multi-chips), the soldering traces adjacent to the cathode soldering points (C) have at least one 10-mm² minimum irregular-shaped surface, represented in an circular area (A1), Fig. 10.

For minimum expression versions, said core can have light-emitting elements on a single side.

In the device, the functional parts and commands are connected to the vehicle general circuit, including the rotation signal and that of the progressive frontal light (B-C-D) and all beams and/or the chamber (100). These can be operated automatically, together with other sidelights and/or the central locking system by means of a remote control and/or the connection of a security or alarm system and/or indirectly as comfort or security lights, together with the interior lighting, and/or boot lights, and/or with the opening of the bonnet or doors.

The device can be operated manually by one or both sides by a switch, which is recommended for various utilities and/or possible auxiliary tasks, such as changing a wheel. Its extra security function is important because it facilitates vision of other drivers of a person working at the side of a vehicle in the dark.

The progressive signal is also switched on by a controller (driver) or data bus, which detects a change of wheel direction and in synchronization with the speed and/or gear to facilitate parking operations, in first and reverse gears at low speed.

The progressive signal is switched on or off through the action of interposed manual or automatic commands from its own dimmer circuit (D), which progressively increases or reduces light intensity for any light function or beam.

The progressive switch on and off is performed by its own controller and/or the same vehicle with an interpolated switch on/off time between one and two minutes to avoid overheating and ensure long device lifetime, said dimmer or controller adjusting the current for gradual slow switch on and off and/or a remote control with a sensor switch, before automatic switch off is produced by the timer. Another possibility is that the device switches off when first gear is engaged, but the frontal spot remains on (B1).

The improvement to obtain high brightness with a crystalline perimeter without shadows and the elimination of misting is also achieved by precisely cutting the window around its perimeter (L) with a laser cutter programmed with temperatures of between 1,500°C to over 20,000°C or by a high-pressure water jet at over 100 bar, It is thus possible to construct a module as a standard unit, with or without a chamber and install it on various rear view mirrors, internally fixing it in place with a perimeter of double-sided adhesive tape (K) in addition to the screws and clips and which also acts as an aerodynamic anti-noise seal. See Figs.15-A and B.

Similarly, the use of a progressive light, but horizontally developed with beams that are summed to enlarge the illuminated field are applicable to other vehicle lights, especially the main headlights and/or the rear lights in combination with parking operations and/or turning the wheels as described above.

It can be appreciated that the light source or light-emitting core of this invention described up to this point, is adaptable to the construction of other types of luminary and applicable to any other low-consumption part of the vehicle. The cited module would also be applicable to the home, or could also be included in a range of apparatus.

Those skilled in the art would be able to introduce changes and modifications in the described exemplary embodiments without leaving the scope of the invention in accordance with that defined in the attached claims.

## Claims

1. A multisignal device being applicable to a rear-view mirror of a vehicle, said device being installed in the inside of a housing carrying the mirror, on a portion of said housing or on a lower housing cover and at least integrating a light source being fit to provide an intermittent signal projecting the light in the forward, sideward and rearward directions; **characterized in that** it includes two signaling units being arranged in a joint or separate arrangement, one of them comprising an array of light emitters being adapted to be progressively switched on in a sequential, combined and/or consecutive manner as per the vehicle's running direction and speed and thus allowing to cover a wide range with their light beams by extending the illuminated field in a vertically downward direction and in a rearward direction and/or towards an external side of the vehicle, said array of light emitters integrating a number of light-emitting elements (4, 4A) being fixed on a supporting core (7, 7A) having conductive paths forming a double-faced circuit or two parallel or nonparallel, opposite circuits, said path-carrying faces being connected by at least one electric bridge (52), the light being emitted by these light-emitting elements (4, 4A) being directed through at least one transparent cover (1) along light paths (X1) and (X3) or at least along one of them from one and the same supporting core (2), the device being adapted to provide said intermittent light function.

2. A device as per claim 1, **characterized in that** for said signals the transparent or translucent element or elements it uses are colorless or slightly tinted in a fumé, light blue, watery green, whitish or orange tint, among others, the device emitting at least a white light to the front in a direction (P1) for the first beam (B1) of the progressive signal and of a wave length of between 400 and 620 nanometers for the intermittent signal covering the rearward oriented area (F2) taking as a reference a 60° angle to be covered outside the vehicle as from the running axis taken as a 0° reference.

3. A device as per claim 1, **characterized in that** it has a rearwardly oriented light outlet being a path (8) between the surface of the transparent cover (1) and the reflector (2) being normally metallized or of another color and having a concave, tube-shaped bottom (M), the light exiting at the end through a zone (9) being delimited by two adjacent surfaces (41) and (42) where the increased difference between said surfaces produces a solid passage for the light and incorporating a series of microprisms in order to give a better definition to the passage of the light through it and to prevent the light from being directly visible for the eyes of the driver of the vehicle.

4. A device as per claim 1, **characterized in that** in order to prevent the steaming up and the condensation it incorporates a second transparent plate (30) being thinner than the outside transparent cover (1), an air chamber (31) being created by a gap of at least 0.1 mm between said transparent cover and plate, this latter being gripped around the whole perimeter between the transparent cover (1) and the reflector (2), this latter being in part possibly provided with prisms, microlenses or a diffusing engraving, the device being atmospherically linked in order to thus balance the temperature through at least one orifice (32), the system being completed by an external orifice (17) and/or the dissipating fins (16), and/or a metal plate being close to the ventilated source or core (20) and/or a second circuit separating the resistive circuit from the source, instead of the surface (30) an a thermal film being alternatively applied which is made of a material having a heat conduction being different from that of the transparent cover (1) and being provided with manometrically operating microflutes and thus repelling the water and the condensation.

5. A device as per claim 1, **characterized in that** the transparent cover offers a crystalline, shadowless perimeter (1-A) as from the boundary (L) with a width of 10 mm in a great part of its extension, said crystalline vision band (VC) consisting in hiding the weld edge underneath the housing edge, the surfaces (1-A) and (1-B) respectively being the external and the internal one being related to each other as 2 surfaces that are as parallel, flat and smooth as possible, (1-B) at utmost having an inclination of less than 40° with respect to (1-A), and if (1-B) is curved this condition is satisfied by its tangent at a middle point of said 10 mm.

6. A device as per claim 1, **characterized in that** said devices being arranged in a joint or separate arrangement achieve a crystalline, shadowless perimeter by applying a cut at the perimeter (L) of the opening of the housing or portion containing them even if said originally preformed opening did not exist with a cut by laser beam being programmed with temperatures between 1,500 and more than 20,000 degrees centigrade or by means of a water jet being at a high pressure of more than 100 bar, this allowing to fit at least a portion in the inside with a higher accuracy for a standard piece being external to the rear-view mirror by means of a double-faced adhesive perimeter (K) besides making up a joint against the aerodynamic noise and/or with screws and/or clamps.

7. A device as per claim 1, **characterized in that** said light-emitting core with its paths is painted in any color being similar to that of the reflector and is covered by a protuberant portion of said reflector (3) having axial orifices through which the light exits in the lateral directions (x1) and (x3) and/or frontal orifices (44) of any shape for ventilation and extra light exit in the direction (x2), and/or is covered only by a machined area (80) with inner microprisms, concavities of a hemicylinder type, machining, lenses or a diffusing engraving at the transparent cover (1) or (30) of at least 10 mm before and after the intersection of said transparent cover and the tip of the core or circuit.

8. A device as per claim 1, **characterized in that** the light-emitting core (Z), according to the desired light angle, is a sandwich of at least two circuits being interconnected by bridges (52) or tubes being printed by deposition or connecting cables, plates or rivets, said at least two circuits being fixed or adhered to a preformed core being made of a material having a high heat-conducting power, said preformed core being provided with longitudinal perforations allowing the air circulation, the resulting external faces of the light source module being parallel or nonparallel and deviating from an axis between 0° and +/-90° as from a lower or upper angular point (XL) up to being a plane or circuit (7A), said faces carrying the light-emitting elements of the same or different nature on at least one of said external faces (25),

9. A device as per claim 1 or 8, **characterized in that** on the light-emitting core (Z) the circuit paths are printed by any deposition, stamping or adhesive process even directly on the radiating body of the core (20), or else they are made of die-cut, bent and fixed sheet enveloping said core (20) in case of this latter being a molded piece with the opposite faces arranged with the desired spacing, inclination and shape (Fig. 11-C), or else they can have a base (81) in order to thus be stably fixed to a second circuit such as the resistive protection one, flat or sheet-shaped cable or supporting base circuit.

10. A device as per claim 1 or 8, **characterized in that** at its base (81) the core is provided with insertion and plug-in paths (83) allowing to connect it to a second circuit in its turn consisting of press-formed and die-cut plate paths (82) in order to thus insert, hold and grip one or several cores having the same or different configurations as per a repetitively modular shape, with the light exiting from one or more faces, said core being laterally shiftable in a parallel connection on said paths of the second supporting circuit.

11. A device as per claim 1 or 8, **characterized in that** the light-emitting core (Z) has nonparallel, opposite and spaced faces, and it also has a third face facing the front with a light-emitting element (5) being operable to emit light in the direction (x2), said frontal face or circuit being also able to house a camera of any type with its interface.

12. A device as per claim 1 or 8, **characterized in that** at their circuits or paths the cores are prepared for a combined insertion of light-emitting elements of the same or different nature and provided with optics of any kind, such as LED's, PCB circuits with a chip LED array or multichip encapsulated LED's, with weld paths being adjacent to the cathode points (C) of said elements having at least for one cathode a minimum surface of irregular shape of 10 mm².

13. A device as per claim 1 or 8, **characterized in that** at the light-emitting core (Z) the body (20) is metallic and electroconductive and is connected to the paths through said bridges (52) so as to thus enhance the conduction of heat to an element having a bigger metallic mass, this connectivity being to the same pole connecting with the cathodes of the different light-emitting elements.

14. A device as per claim 1 or 8, **characterized in that** the light-emitting core (Z) is fixed and held by studs or clamps (22) onto a support cover of the circuit (50) or (50A) or between said cover and the reflector or fixed to the reflector or to the transparent cover or gripped between at least two of those parts and/or fitted to another circuit by means of a stable base (81) in order to thus keep the resistor circuit (21) at a distance from the light-emitting portion (4) with the possibility of inserting several cores into a base.

15. A device as per claim 14, **characterized in that** said supporting cover having an upper or inclined shape is made of a material having a high heat-conducting power such as polycarbonate with filler, resin, ceramic, polyamides or metal and is provided with fins (16) for dissipating the heat, and furthermore provides a guide for the air circulation through at least one orifice (17) or (17A), said orifices being located at said cover or in some internal portion of the device or between the parts, the internal chambers of the reflectors (2), the passage (8) and the chamber (31) between transparent plates being thus atmospherically balanced, the cover having an almost flat joining perimeter and being fixed by a clamp, a welded joint or screws to the inside of the reflector body (2), or else it can be the actual reflector body or an inner housing body of the device.

16. A device as per claim 1, **characterized in that** at least one of the reflecting surfaces for any of the signals is an axial collimator or reflector having an elongated surface with the shape of an elongated, stepped parabola being almost parallel to the surface of the transparent cover with micromirrors being arranged like the slats of a jalousie reflecting the light towards the front and thus establishing a light path based on the light along the path (x3) and/or (x1).

17. A device as per claim 1, **characterized in that** as a variant it projects the light in the rearward direction (F2) from a concentrated, flat core (7A) through the passage (8) by means of a retroreflector (40) or (S1) being part of the reflector piece (2) or separate from it and consisting in a flat micromirror being slightly curved or parabolic and inclined at a 45° angle within +/-30° with respect to the initial mayor axis (x) of the light-emitting element (4) and being applied in an interposed arrangement between said light emitting element and the transparent cover thus producing a deviation of the light close to 90° or along the path (x1) towards (F2).

18. A device as per claims 1 and 17, **characterized in that** as a variant it projects the light in the rearward direction (F2) from a flat core (7A) by means of a transparent optical reflector (R) or prismatic body having a light receiving surface (P) in the vicinity of the light-emitting element (4) as per a normal to the initial light path (x), the light being reflected on the inner surface being smooth or provided with microprisms (S1) with an inclination of about 45° being variable within +/-30°, where part of the light is bifurcated and follows the path (x2) by transparency, and the other part follows the path (x1) at 90° with respect to the initial path (x) towards the focus (F2), said prismatic body extending as much as necessary towards the outlet surface (E) and having in its path a middle inner surface (M) with a number of reflecting surfaces or inner collimator with a curved, half-tube-shaped bottom.

19. A device as per claims 1 and 17, **characterized in that** as a variant it projects the light in the rearward direction (F2) from a concentrated core being a bulb lamp (45) being tinted or masked in order to produce the color light, this latter being reflected on a cover (48) consisting in a separate, heat-resistant piece of metallized polycarbonate or metal having more or less the shape of a "T" or "Y" with outspread flanges, the reflecting surfaces being smooth, flat, parabolic or provided with micromirrors and inclined at 45° with respect to the beams being emitted by said bulb lamp in order to thus orient the light at 90° at least in one sense towards (F2) with respect to the path being normal to the transparent cover (1) or focal center that said bulb lamp would have towards the outside of the device.

20. A device as per claims 1, 17, 18 and 19, where the reflectors and cores are commonly **characterized in that** they are or are not separate elements, this allowing:
A - them to be fixed to the surface (1) or (30) or to the reflector or inner body (2) by means of clamps, press-fitting, gluing, hot stamping, ultrasound or other thermal means;
B - them to be shifted without redesigning the device in order to thus obtain an accurate adjustment of the light exit in the desired direction (x1) or (x3);
C - to avoid the dark zone in the direction (x2) by means of holes in the retroreflector (44) separating the surfaces (S1), the flanges or the faces of the circuits of the core (20), and to include between both a light-emitting element (5) emitting light towards (x2);
D - to have another similar, symmetric and opposite element in order to project the light towards the collimator or zone (F1); and
E - them to form an integrating part of some of the pieces of the device such as the reflector (2) for the mirror (40) or the transparent plates (1) or (30) for the body (R) or the core (20) as a module being inserted into another circuit or base.

21. A device as per claim 1, **characterized in that** the progressive function (B1) is a light beam being in a position to be permanently switched on and visible at the front in white color, said light beams serving the purpose of determining two lighted paths at the sides of the vehicle from an infinitely remote location up to the lateral ground in the vicinity and distinguishing the width and presence of said vehicle as seen at the front, said light beams by means of the light source (4) and (5) providing an illumination towards a focus (P1) at the front coinciding with the running axis at 0°, the intensity of that focus being higher than that of the rest of the area being lighted by the same function and higher than 1 candela, for the remaining area said intensity being higher than 0.01 candela within a horizontal extension spanning from +80° towards the outside up to +45° towards the inside and vertically a minimum of +/-15° from a 0° plane coinciding with the focal center, the remaining vertical beams of the device (B-C 2 + B-C 3 + B-C 4) progressively merging till lighting a path at the sides, said remaining vertical beams possibly being of other colors such as yellow, blue or green.

22. A device as per claim 1, **characterized in that** the lighting functions of the vehicle and their controls are connected to a general circuit of the vehicle and include the turning signal and/or the complementary illumination of the camera (100) and/or the frontal light (B-C) whose beams are in a position to be progressively added or removed, said lighting functions being in a position to be automatically actuated with other lights of the vehicle and/or the centralized locking system by means of the remote control, the operation of the camera and/or the connection of a safety and alarm system, and/or indirectly as comfort and safety lights together with interior lights of the passengers cabin or the trunk, and/or with the opening of the motor compartment or the doors, and/or they will be voluntarily actuated in a separate manner as regards the remaining lighting functions of the vehicle.

23. A device as per claim 22, **characterized in that** the progressive function (B-C) is controlled by means of an information bus or driver automatically connecting or disconnecting it when detecting any change in the direction of the wheels and/or in synchronism with a give speed and/or with a give gear being used, in order to thus facilitate the parking maneuvers, and/or by rain or darkness sensors.

24. A device as per claim 22, **characterized in that** the progressive function (B-C) is connected or disconnected with an interposed actuation of the voluntary or automatic controls of an own attenuator or dimmer (D) being fit to progressively increase or reduce its light intensity.

25. A device as per claims 1 through 23 which by employing the techniques characterizing the light-emitting core (Z) and/or its reflective versions and/or the progressive beam function including the horizontal shape can be adapted to different luminaires and lighting fixtures in the home and industry or in other parts of the vehicles or to other vehicles.
